(19) Europäisches Patentamt
European Patent Office
Office européen des brevets

(11) Veröffentlichungsnummer: **0 040 760**
**B1**

(12) # EUROPÄISCHE PATENTSCHRIFT

(45) Veröffentlichungstag der Patentschrift: **13.04.83**

(51) Int. Cl.³: **C 07 C 131/00,** C 07 C 131/04 // C08G18/80

(21) Anmeldenummer: **81103684.7**

(22) Anmeldetag: **13.05.81**

(54) **Verfahren zur Herstellung verkappter Isocyanate.**

(30) Priorität: **22.05.80 DE 3019491**

(43) Veröffentlichungstag der Anmeldung: **02.12.81 Patentblatt 81/48**

(45) Bekanntmachung des Hinweises auf die Patenterteilung: **13.04.83 Patentblatt 83/15**

(84) Benannte Vertragsstaaten: **BE FR GB IT NL**

(56) Entgegenhaltungen:
**EP-A-0 023 560**
**DE-A-1 618 361**
**DE-A-2 113 752**
**DE-B-2 502 428**

(73) Patentinhaber: **Akzo GmbH,**
***Postfach 10 01 49 Kasinostrasse* 19-23,**
**D-5600 Wuppertal-1 (DE)**

(72) Erfinder: **Zengel, Hans G., Dr. Dipl.-Chem., Nordring 6, D-8751 Kleinwallstadt (DE)**
Erfinder: **Bergfeld, Manfred, Dr. Dipl.-Chem., August-Pfeffer-Strasse 6, D-8765 Erlenbach (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

Verfahren zur Herstellung verkappter Isocyanate

Die vorliegende Erfindung betrifft ein Verfahren zur Herstellung verkappter Isocyanate aus einem Bis-N-chloramid und einem aromatischen Aldoxim oder einem aliphatischen, cycloaliphatischen oder aromatischen Ketoxim.

Wegen ihrer großen Reaktionsfähigkeit und ihrer Zersetzlichkeit durch Wasser werden Isocyanate in Form leicht spaltbarer Addukte (verkappte Isocyanate oder Isocyanat-Abspalter) hergestellt, aufbewahrt und umgesetzt. Insbesondere in der Lackindustrie spielen derartige Isocyanat-Addukte eine wichtige Rolle. Leicht spaltbare Addukte erhält man aus Isocyanaten und beispielsweise Phthalimid, Imidazol, Caprolactam, Phenylmethylpyrazolon, Diphenylamin, Alkoholen, Phenolen, Blausäure, Bisulfit und Oximen (O. Bayer, Angew. Chem. 59 (1947), Seite 257 ff). Wegen ihrer niedrigen Spalttemperatur sind oximblockierte Isocyanate von besonderem Interesse. Ihre Darstellung erfolgte bislang durch die Addition des Oxims an das Isocyanat in einem inerten Milieu, beispielsweise in Benzin oder Äther. Nachteilig ist hierbei, daß die Isocyanate zuvor synthetisiert werden und bei der Adduktbildung wasserfreie Lösungsmittel angewendet werden müssen. Die auf diese Weise erhältlichen oximblockierten Isocyanate enthalten Spuren an freiem Isocyanat, so daß Toxizitätsprobleme bei der Verarbeitung bestehen. Es bestand daher das Bedürfnis nach einem Verfahren, welches die direkte Herstellung oximblockierter Isocyanate ermöglicht.

Gegenstand der vorliegenden Erfindung ist ein Verfahren zur Herstellung verkappter Isocyanate der allgemeinen Formel

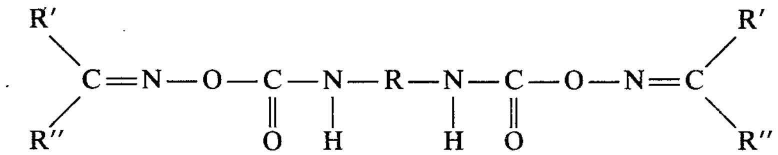

in der R, R′ und R″ für einen aliphatischen, cycloaliphatischen oder aromatischen Kohlenwasserstoffrest stehen, wobei die Reste R′ und R″ gleich oder verschieden sein können und im Falle R′= aromatischer Rest R″ auch ein Wasserstoffatom sein kann, das dadurch gekennzeichnet ist, daß man Terephthaldialdoxim, Isophthaldialdoxim oder ein aliphatisches, cycloaliphatisches oder aromatisches Ketoxim bzw. ein aromatisches Aldoxim der allgemeinen Formel

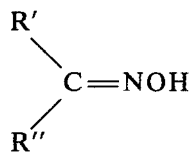

in Gegenwart von 10 bis 100 Molprozent Natrium-, Kalium- oder Calciumhydroxid — bezogen auf eingesetztes Ketoxim bzw. Aldoxim — mit dem Natrium-, Kalium- oder Calciumsalz eines Bis-N-chloramid der allgemeinen Formel

Cl – NH – CO – R – CO – NH – Cl

in Wasser oder einem Gemisch aus Wasser und einem aprotischen Lösungsmittel umsetzt.

Der dem erfindungsgemäßen Verfahren zugrundeliegende Reaktionsverlauf ist als überraschend zu bezeichnen. Die Umsetzung von Aldoximen mit Chloramiden in nichtprotischen Lösungsmitteln führt nämlich nicht zu den angestrebten blockierten Isocyanaten. Das Chloramid wirkt hier als Oxydationsmittel, es entstehen $\alpha$-Chloraldoxime, die ihrerseits bekanntermaßen bei Anwesenheit einer Hilfsbase Nitriloxide bilden. Arbeitet man in neutralem wäßrigen Milieu, so reagieren die Oxime mit den N-Halogenamidalkalisalzen zu Phenacylharnstoffen. Es war daher nicht zu erwarten, daß unter den Bedingungen des anmeldungsgemäßen Verfahrens oximblockierte Isocyanate zugänglich sind.

Bei dem erfindungsgemäßen Verfahren können aliphatische, cycloaliphatische und aromatische Bis-N-chloramide eingesetzt werden. Beispiele geeigneter aliphatischer Bis-N-chloramide sind Bernsteinsäure-bis-N-chloramid, Adipinsäure-bis-N-chloramid, Pimelinsäure-bis-N-chloramid, Korksäure-bis-N-chloramid, Sebazinsäure-bis-N-chloramid, Dodecan-1,12-dicarbonsäure-bis-N-chloramid und Bis-N-chloramide höherkettiger Dicarbonsäuren wie beispielsweise von »Empol 1010« mit 34 bis 51 Kohlenstoffatomen. Als cycloaliphatisches Bis-N-chloramid kommt beispielsweise das Cyclohexan-1.4-bis-N-chloramid in Betracht. Beispiele geeigneter aromatischer Bis-N-chloramide sind 4-Methyl-isophthalsäure-bis-N-chloramid, Methylterephthalsäure-bis-N-chloramid, Terephthalsäure-bis-N-chloramid, Isophthalsäure-bis-N-chloramid, Diphenyläther-4,4′-dicarbonsäure-bis-N-chloramid, Äthylen-1.2-bis-phenyl-4.4'-carbonsäure-bis-N-chloramid und Naphthalin-2.6-dicarbonsäure-bis-N-chloramid. Die für die Durchführung des erfindungsgemäßen Verfahrens benötigten Bis-N-chloramide sind aus den zugehörigen Dicarbonsäuren leicht zugänglich, beispielsweise durch Chlorierung mittels Chlor nach den Verfahren der deutschen Patentschriften 2 502 411, 2 502 412 und 2 559 520.

Als Oxim wird beim erfindungsgemäßen Verfahren ein aromatisches Aldoxim oder ein aliphatisches, cycloaliphatisches oder aromatisches Ketoxim eingesetzt. Beispiele geeigneter aromatischer Aldoxime sind Benzaldoxim, Tolylaldoxim, Terephthaldialdoxim und Isophthaldialdoxim. Geeignete Ketoxime sind Acetonoxim, Methyläthylketoxim, Methylpropylketoxim, 2-Butanonoxim, Methylisobutylketoxim, 3-Methyl-2-butanonoxim, Diisobutylketoxim, 2-Pentanonoxim, 3-Pentanonoxim, 4-Methyl-2-pentanonoxim, 2-Heptanonoxim, 3-Heptanonoxim, Äthylhexylketoxim, Cyclohexanonoxim, Acetophenonoxim und Benzophenonoxim. Da bei der Verwendung der oximblockierten Isocyanate das abgespaltene Oxim üblicherweise nicht zurückgewonnen wird, werden aus ökonomischen Gründen möglichst billige Oxime zur Herstellung der blockierten Isocyanate verwendet. Beim anmeldungsgemäßen Verfahren werden daher vorzugsweise Benzaldehyd-, Cyclohexanon-, Aceton- und Acetophenon-oxim eingesetzt.

Das Bis-N-chloramid wird in Form seines Natrium-, Kalium- oder Calciumsalzes eingesetzt. Selbstverständlich kann die Umsetzung auch mit den entsprechenden Rubidium-, Caesium-, Strontium- oder Bariumsalzen durchgeführt werden, aus ökonomischen Gründen werden sie jedoch als Ausgangsstoffe nicht in Betracht gezogen. Aus verfahrenstechnischen Gründen ist es vorteilhafter, nicht von vorgebildeten Salzen der Bis-N-chloramide auszugehen, sondern statt dessen das Bis-N-chloramid vorzulegen und die Alkali- bzw. Erdalkalihydroxidlösung einzutragen, so daß auf diese Weise die gewünschten Alkali- bzw. Erdalkalisalze im Reaktionsgemisch vorliegen.

Auch das Oxim könnte in Form seines Natrium-, Kalium- oder Calciumsalzes eingesetzt werden. Jedoch ist es sinnvoller, das freie Oxim vorzulegen und das Alkali- bzw. Erdalkalihydroxid zuzufügen. Im Reaktionsgemisch muß das Oxim wenigstens zum Teil als Alkali- bzw. Erdalkalisalz vorliegen. Die Ausbeute an oximblockiertem Isocyanat ist dann am höchsten, wenn das gesamte Oxim als Salz vorliegt. Ein weiter Überschuß an Alkali erhöht dagegen die Ausbeute nicht mehr und es kommt in einigen Fällen sogar infolge der Bildung eines Amins zu Ausbeuteverlusten. Aus den genannten Gründen beträgt die Alkali- bzw. Erdalkalimenge, welche für die Bildung des Oximsalzes benötigt wird, 10 bis 100 Molprozent, bezogen auf Oxim. Wenn die insgesamt eingesetzte Menge Alkali- bzw. Erdalkalihydroxidmenge nicht ausreicht, um wenigstens einen Teil des Oxims in das Alkali- bzw. Erdalkalisalz zu überführen, wird also in neutralem Medium gearbeitet, so werden, wie das Vergleichsbeispiel 1 zeigt, keine oximblockierten Isocyanate, sondern Phenacylharnstoffe erhalten.

Chloramid und Oxim können in unterschiedlicher Salzform vorliegen. Vorzugsweise wird aus ökonomischen Gründen jedoch nur mit einem Hydroxid gearbeitet.

Die Reaktionspartner werden vorzugsweise in stöchiometrischen Mengen eingesetzt, jedoch kann auch Oxim in geringem Überschuß angewendet werden.

Als Lösungsmittel werden beim erfindungsgemäßen Verfahren Wasser oder ein Gemisch aus Wasser und einem aprotischen Lösungsmittel angewendet. Bevorzugte aprotische Lösungsmittel sind Dimethylacetamid, Dimethylformamid, Sulfolan und Tetramethylharnstoff. Aus ökonomischen Gründen wird vorzugsweise Wasser als Lösungsmittel verwendet. Wie das Vergleichsbeispiel 2 zeigt, werden bei Anwendung nichtprotischer Lösungsmittel keine oximblockierten Isocyanate erhalten.

Die Reaktionstemperatur beträgt 20 bis 100°C, vorzugsweise 20 bis 60°C. Die Reaktionsdauer hängt von der Reaktionstemperatur und den Reaktionspartnern ab. Sie liegt in der Regel zwischen 1 und 12 Stunden. Die Umsetzung ist dann zu Ende, wenn das Reaktionsgemisch nicht mehr oxydierend wirkt. Dies kann mit Hilfe von Kaliumjodid/-Jod/-Stärkepapier leicht festgestellt werden.

Die Verdünnung des Reaktionsgemisches ist in keiner Weise signifikant. Es kann sowohl homogen als auch heterogen gearbeitet werden, ohne daß nennenswerte Unterschiede in der Ausbeute auftreten.

Die Durchführung des erfindungsgemäßen Verfahrens erfolgt in einfacher Weise so, daß man das Bis-N-chloramid im Lösungsmittel suspendiert, es durch Zugabe des Hydroxids in die Salzform überführt, wobei eine Lösung entsteht, dann das Aldoxim oder Ketoxim unter Rühren und Kühlen zudosiert und das Reaktionsgemisch ggf. unter erhöhter Temperatur ausreagieren läßt. Die Umsetzung ist dann beendet, wenn das Reaktionsgemisch keine oxydierende Wirkung mehr zeigt, was mit Hilfe eines Kaliumjodidstärkepapiers leicht festgestellt werden kann.

Das gewünschte oximblockierte Isocyanat, ein Oximcarbamat fällt aus dem Reaktionsgemisch aus, kann beispielsweise mittels Eiswasser gewaschen und erforderlichenfalls durch Umkristallisieren gereinigt werden.

Das erfindungsgemäße Verfahren besitzt gegenüber bekannten Verfahren wesentliche Vorteile. Die erfindungsgemäße Direktsynthese der blockierten Isocyanate aus Chloramid ist gegenüber den herkömmlichen Verfahrensweisen, wonach zunächst das reine Isocyanat hergestellt und daraus durch Addition das blockierte Isocyanat gewonnen wird, sehr ökonomisch. Ein besonderer Vorteil des erfindungsgemäßen Verfahrens besteht darin, daß es in wäßrigem Milieu durchgeführt werden kann und daß die erhältlichen blockierten Isocyanate keine Spuren an freien Isocyanaten enthalten. Diese

Eigenschaft ist bei der Verwendung der Produkte in der Lackindustrie deshalb außerordentlich wertvoll, weil Diisocyanate, insbesondere die leichtflüchtigen aliphatischen Diisocyanate, große toxikologische Probleme verursachen würden. Ein weiterer Vorteil besteht darin, daß das erfindungsgemäße, von einem Carbonsäurederivat ausgehende Verfahren bezüglich der aus den blockierten Isocyanaten freizusetzenden Isocyanate größere Möglichkeiten bietet als das von Diaminen ausgehende klassische Verfahren der Isocyanatsynthese mittels Phosgen.

Das erfindungsgemäße Verfahren wird durch die nachfolgenden Ausführungsbeispiele näher erläutert.

## Beispiel 1

32,6 g (0,1 Mol) Diphenyläther-4.4'-bis-N-chloramid wurden bei 0°C in 300 ml Wasser unter kräftigem Rühren dispergiert und bei 0°C mit 16,1 g (0,4 Mol) Natriumhydroxid in 400 ml Wasser gelöst, tropfenweise versetzt. Die Zutropfgeschwindigkeit wurde so eingerichtet, daß die Temperatur des Kolbeninhalts nicht über 5°C anstieg. Zu der klaren Lösung wurden bei 0°C 14,7 g (0,2 Mol) Acetonoxim rasch zudosiert. Die hellbraun gefärbte klare Lösung wurde nun 2 h bei 5°C gerührt und anschließend 5 h bei 30°C ausreagieren gelassen. Bereits nach 15 Minuten bei Raumtemperatur begann sich ein farbloser voluminöser Niederschlag abzuscheiden. Nach beendeter Reaktion (Prüfung mit Kaliumjodidstärkepapier) wurde das Reaktionsgemisch mit verdünnter Salzsäure neutralisiert. Der Niederschlag wurde über eine Glasfritte abfiltriert und mit Eiswasser chloridfrei gewaschen und anschließend im Vakuumtrockenschrank bei 45°C getrocknet. Auf diese Weise konnten 33,5 g (0,084 Mol) an Ketoximcarbamat = 84% d. Th. gewonnen werden. Die Verbindung ist gut löslich in allen aprotischen Lösungsmitteln wie z. B. Dimethylformamid und Dimethylacetamid sowie in niederen Alkoholen wie Methanol, Äthanol, sowie in Aceton, Methylenchlorid, Chloroform und Essigester. Nach Umkristallisation aus Äthanol/Wasser fiel die Verbindung in Form beiger Nadeln mit einem Schmelzpunkt von 75°C an. Die Struktur der Verbindung wurde durch NMR, IR, MS-Spektren sowie durch die Elementaranalyse und durch einen Vergleich mit einem synthetisch aus Diphenyläther-4.4'-diisocyanat und Acetonoxim hergestellten Produkt bestätigt.

## Beispiel 2

Analog Beispiel 1 wurden 29,8 g Dodecan-1.12-bis-N-Chloramid (0,1 Mol) in 600 ml Wasser mit 16,1 g (0,4 Mol) Natriumhydroxid bei 0°C zu einer Lösung umgesetzt. Danach wurden 14,7 g (0,2 Mol) Acetonoxim zur Reaktionslösung zugeführt, wobei die Zugabegeschwindigkeit so dosiert wurde, daß die Innentemperatur 5°C nicht überstieg. Die Reaktionslösung verblieb eine weitere Stunde bei 5°C und anschließend wurde unter kräftigem Rühren die Kühlung entfernt. Sobald das Reaktionsgemisch Raumtemperatur erreicht hatte, begann ein farbloser voluminöser Niederschlag auszufallen. Der Reaktionsansatz wurde noch 5 h bei Raumtemperatur weitergerührt und zeigte danach keine oxidierende Wirkung mehr. Der Niederschlag wurde nun über eine Glasfritte abfiltriert und mit 250 ml Eiswasser portionsweise ausgewaschen. Nach dem Trocknen konnten so 29,3 g einer bräunlichen wachsartigen Masse gewonnen werden, aus der durch Umkristallisation aus wäßrigem Äthanol 27,0 g (0,0728 Mol) entsprechend 72,8% d. Th. an oximblockierten Dodecandiisocyanat gewonnen werden. Die Identität dieser Verbindung wurde durch Elementaranalyse, IR und 1H-NMR-Spektren sowie einem Vergleich mit der synthetisch aus dem freien Isocyanat und Acetoxim gewonnenen Verbindung sichergestellt.

## Beispiel 3

Analog Beispiel 1 wurden 23,3 g Terephthalsäure-bis-N-chloramid (0,1 Mol) und 29,2 g Acetophenonoxim (0,216 Mol) in einer Lösung von 16,5 g (0,412 Mol) Natriumhydroxid in 1 l Wasser 6 h bei 30 bis 35°C umgesetzt. Analog Beispiel 1 hatte sich bereits beim Erwärmen des Reaktionsgemisches von 0°C auf Raumtemperatur ein voluminöser weißer Niederschlag abzuscheiden begonnen. Nachdem das Reaktionsgemisch nicht mehr oxidierend wirkte, wurde der Niederschlag über eine Glasfritte abfiltriert und mit insgesamt 150 ml Wasser und anschließend 50 ml Äthanol portionsweise gewaschen und bei 80°C im Vakuum getrocknet. Es konnten auf diese Weise 27,2 g entsprechend 63,2% d. Th. einer Verbindung gewonnen werden, die identisch mit einem synthetisch aus p-Phenylendiisocyanat und Acetophenonoxim gewonnenen Substanz war. Die Verbindung begann sich oberhalb 160°C zu zersetzen und war nur in polaren aprotischen Lösungsmitteln wie Dimethylformamid, Dimethylacetamid, Sulfolan, Tetramethylharnstoff und Dimethylsulfoxid löslich.

Beispiel 4

Analog Beispiel 1 wurden 32,6 g (0,1 Mol) Diphenyläther-4.4'-bis-N-chloramid sowie 27,1 g (0,2 Mol) Acetophenonoxim in einer Lösung von 16,1 g (0,402 Mol) Natriumhydroxid in 800 ml Wasser umgesetzt. Nach einer Gesamtreaktionszeit von 6 h bei 30°C war das Reaktionsgemisch nicht mehr oxidierend und es wurde von dem gebildeten hellbraunen feinen Niederschlag über eine Glasfritte abfiltriert. nach dem Neutralwaschen mit insgesamt 150 ml Eiswasser wurde der Niederschlag bei 50°C unter ~10 Torr im Vakuum getrocknet. Anschließend wurde aus Wasser/Äthanol umkristallisiert und auf diese Weise 42,5 g (entsprechend 81,3% d. Th.) an acetophenonoximblockiertem Diphenyläther-4.4'-diisocyanat mit einem Erweichungspunkt von 55°C und einem Schmelzpunkt (unter Zersetzung) von 110°C (Gasentwicklung) gewonnen. Die Verbindung ist gut löslich in aprotischen Lösungsmitteln wie Dimethylformamid, Sulfolan, Dimethylacetamid, Dimethylsulfoxid sowie in Methanol, Äthanol, Methylenchlorid, mäßig löslich in Chloroform, wenig löslich in siedendem Tetrachlorkohlenstoff und praktisch unlöslich in Wasser, Ligroin und Cyclohexan.

Beispiel 5

Analog Beispiel 1 wurden 21,4 g (0,1 Mol) Adipinsäure-bis-N-chloramid (99%ig) und 22,7 g (0,2 Mol) Cyclohexanonoxim in einer Lösung von 16,1 g (0,402 Mol) Natriumhydroxid in 700 ml Wasser umgesetzt. Die zunächst bei 5°C klare, farblose Lösung trübte sich beim Erreichen von Raumtemperatur schnell ein und es fiel ein farbloser kristalliner Niederschlag aus. Nach 8 h bei 30°C war das Reaktionsgemisch nicht mehr oxidierend und es wurde von dem hellbeigen Niederschlag abfiltriert und dieser mit mehreren Portionen Eiswasser neutral gewaschen. Nach dem Trocknen bei 50°C und 20 Torr bis zur Gewichtskonstanz konnten so 17,4 g entsprechend 47,5% d. Th. der gewünschten Verbindung in Form eines feinen farblosen Pulvers gewonnen werden. Aus der alkalischen Mutterlauge wurden nach Neutralisation mit verdünnter Salzsäure auf pH 6 durch Extraktion mit Methylenchlorid weitere 6,2 g (entsprechend 17,2% d. Th.) an cyclohexanonoximblokkiertem Tetramethylen-1.4-diisocyanat mit einem Schmelzpunkt von 163 bis 165°C gewonnen. Die Verbindung, deren Struktur durch Elementaranalyse, 1H-NMR, IR-Spektren sowie durch Vergleich mit einer synthetisch aus dem Diisocyanat und Cyclohexanonoxim hergestellten Probe gesichert wurde, ist gut löslich in polaren aprotischen Lösungsmitteln wie Dimethylformamid sowie niederen Alkoholen, niederen Ketonen, Methylenchlorid, Chloroform, mäßig löslich in $CCl_4$, wenig löslich in Cyclohexan und praktisch unlöslich in Wasser. Eine Reinigung kann durch Umkristallisation aus Methylenchlorid erfolgen.

Beispiel 6

Analog Beispiel 1 wurden 23,3 g (0,1 Mol) Terephthalsäure-bis-N-chloramid und 26,2 g (0,216 Mol) Benzaldoxim in einer Lösung aus 16,8 g (0,42 Mol) Natriumhydroxyd in einem Liter Wasser so lange miteinander umgesetzt, bis keine oxydierende Wirkung im Reaktionsgemisch mehr nachweisbar war. Aus der bei 0 bis 5°C zunächst farblosen Lösung fiel bei Erreichung der Raumtemperatur bereits ein farbloser voluminöser Niederschlag an, der nach 8 h Reaktionszeit (Raumtemperatur) abfiltriert und mit mehreren Portionen Eiswasser neutral gewaschen wurde. Nach dem Trocknen im Vakuum bei 40°C, 20 Torr bis zur Gewichtskonstanz konnten so 22,75 g entsprechend 56,5% d. Th. an benzaldoximblockiertem p-Phenylendiisocyanat in Form eines hellbräunlichen Pulvers gewonnen werden. Die Verbindung ist nur in aprotischen Lösungsmitteln wie Dimethylformamid, Dimethylacetamid, Dimethylsulfoxid, Sulfolan und Tetramethylharnstoff löslich, ihre Struktur wurde durch Elementaranalyse, 1H-NMR, IR-Spektren sowie durch Vergleich mit einer aus p-Phenylendiisocyanat und Benzaldoxim synthetisch hergestellten Probe bestätigt. Aus der wäßrigen Phase konnte nach Neutralisation mit verdünnter Salzsäure kein weiteres oximblockiertes Isocyanat mehr gewonnen werden. Die Lösung roch sehr stark nach Benzaldehyd, so daß offensichtlich ein Teil des Benzaldoxims unter Reaktionsbedingungen hydrolytisch gespaltet wurde.

Beispiel 7

Analog Beispiel 1 wurden 24 g (0,1 Mol) Cyclohexan-1.4-bis-N-chloramid sowie 24,3 g (0,2 Mol) Benzaldoxim in einer Lösung aus 16,1 g (0,402 Mol) Natriumhydroxid in 500 ml Wasser umgesetzt. Aus dem Reaktionsgemisch fiel bereits beim Zutropfen des Benzaldoxims bei 0 bis 5°C ein farbloser kristalliner Niederschlag (wahrscheinlich Natriumsalz des Benzaldoxims) aus, der nach Erreichen von Raumtemperatur sich weitgehend aufgelöst hatte während nach weiteren 15 min. es erneut zur Eintrübung kam und ein beiger Niederschlag ausfiel, der im Verlauf von 5 h bei 30°C zu einer recht voluminösen Masse anwuchs. Das Reaktionsgemisch wurde nun mit Salzsäure auf pH 7 eingestellt und

vom Niederschlag über eine Glasfritte abfiltriert. Der Niederschlag wurde mit mehreren Portionen Eiswasser chloridfrei gewaschen und dann bei 40°C 20 Torr zur Gewichtskonstanz getrocknet. Es konnten auf diese Weise 20,6 g (entsprechend 50,4% d. Th.) an benzaldoximblockiertem trans-Cyclohexan-1.4-diisocyanat in Form eines hellbräunlichen Pulvers gewonnen werden. Seine Struktur wurde durch Elementaranalyse, sowie IR und 1H-NMR-Spektrum sowie Vergleich mit einer synthetisch aus trans-Cyclohexandiisocyanat-(1.4) und Benzaldoxim hergestellten Probe sichergestellt. Die Verbindung ist gut löslich in aprotischen polaren Lösungsmitteln und mäßig löslich in niederen Alkoholen und Ketonen, wenig löslich in Methylenchlorid, Chloroform, praktisch unlöslich in Tetrachlorkohlenstoff, Cyclohexan, Ligroin und Wasser. Das Filtrat enthielt, analog zu Beispiel 6, größere Anteile an Benzaldehyd (offensichtlich hydrolytischer Abbau des Benzaldoxims).

## Beispiel 8

23,3 g (0,1 Mol) Terephthalsäure-bis-N-chloramid wurden in 150 ml Dimethylformamid gelöst und portionsweise zu einer Lösung aus 32,9 g (0,2 Mol) Terephthaldialdoxim und 16,0 g (0,4 Mol) Natriumhydroxid in einem halben Liter Wasser zugetropft. Das Reaktionsgemisch wurde zunächst eine Stunde bei 0 bis 5°C, dann 2 h bei Raumtemperatur und 1 h bei 50°C umgesetzt. Ähnlich wie im Beispiel 7 beschrieben, fiel zunächst bei Zugabe des Terephthal-bis-N-chloramids ein farbloser kristalliner Niederschlag aus, der im Verlauf der Reaktion verschwand, wobei sich gleichzeitig ein neuer Niederschlag bildete. Nachdem das Reaktionsgemisch nicht mehr oxidierend wirkte, wurde die Lösung mit verdünnter Salzsäure neutralisiert und anschließend mit mehreren Portionen Eiswasser chloridfrei gewaschen. Nach dem Trocknen bei 60°C, 1 Torr bis zur Gewichtskonstanz konnten so 38,5 g entsprechend 78,8% d. Th. an terephthalaldoximblockiertem p-Phenylendiisocyanat gewonnen werden. Eine weitere Charge von 2,9 g (6,6% d. Th.) an aldoximblockiertem p-Phenylendiisocyanat konnte aus der wäßrigen DMF-haltigen Lösung gewonnen werden. Die Verbindung ist löslich in polaren aprotischen Lösungsmitteln wie Dimethylformamid, Dimethylacetamid, Dimethylsulfoxid, Sulfolan, mäßig löslich in verdünnter Natronlauge und praktisch unlöslich in niederen Alkoholen, Ketonen und Wasser. Die Struktur der Verbindung wurde durch Elementaranalyse, IR, 1H-NMR-Spktrum sowie durch Vergleich mit einer synthetisch aus p-Phenylendiisocyanat und Terephthalaldoxim hergestellten Verbindung bestätigt.

## Vergleichsbeispiel 1

23,3 g (0,1 Mol) Terephthalsäure-bis-N-chloramid wurden in einem 1-l-Dreihalskolben bei 0°C in 700 ml Wasser suspendiert und unter kräftigem Rühren mit 8 g Natriumhydroxid (0,2 Mol) (als 40%ige wäßrige Lösung) tropfenweise versetzt, wobei die Zutropfgeschwindigkeit so reguliert war, daß die Innentemperatur 5°C nicht überschritt. Dabei ging das Terephthalsäure-bis-N-chloramid in Form seines Natriumsalzes in Lösung, zu welchem nun 24,3 g (0,2 Mol) Benzaldoxim bei 5°C zugetropft wurden. Sofort nach Zugabe der ersten Tropfen an Benzaldoxim fiel ein farbloser kristalliner Niederschlag aus. Die Kühlung wurde nun entfernt und das Reaktionsgemisch insgesamt 8 h bei Raumtemperatur gerührt. Bereits nach einer halben Stunde hatte sich die Reaktionsmischung dunkelbraun gefärbt und es fiel langsam ein dunkelrot-brauner amorpher Niederschlag aus. Nach beendeter Reaktion wurde dieser Niederschlag abfiltriert, sorgfältig gewaschen und getrocknet. Es konnten auf diese Art 13,8 g eines Phenacylharnstoffes (aus p-Phenylendiisocyanat und Terephthalsäurediamid als Vergleichssubstanz synthetisch gewonnen) isoliert werden. Aus der wäßrigen Phase hatte sich eine organische Schicht abgesondert, die eindeutig als Benzaldehyd identifiziert werden konnte.

## Vergleichsbeispiel 2

Analog Vergleichsbeispiel 1 wurden 23,3 g (0,1 Mol) Terephthalsäure-bis-N-chloramid in 500 ml Dimethylformamid bei 0°C unter kräftigem Rühren suspendiert und anschließend portionsweise mit 16,5 g (0,41 Mol) Natriumhydroxid in feingepulverter Form vorsichtig versetzt. Zu der feinverteilten Suspension des Terephthalsäure-bis-N-chloramid-Natriumsalzes wurde anschließend bei ebenfalls 0°C 24,4 g (0,2 Mol) Benzaldoxim tropfenweise zugesetzt. Es mußte dabei für sehr gute Kühlung Sorge getragen werden, da beim Zutropfen des Aldoxims eine stark exotherme Reaktion stattfand. Das Reaktionsgemisch färbte sich dennoch sehr schnell braun, es fiel bereits nach einigen Minuten ein hellbräunlicher Niederschlag aus. Nachdem das Zutropfen beendet worden war, wurde noch 2 h bei 5°C weitergerührt und anschließend die Kühlung entfernt. Die Reaktionstemperatur stieg sehr schnell auf 40°C an und es wurde dann noch 7 h bei Raumtemperatur weitergerührt. Danach war die Umsetzung beendet (Prüfung mit Kaliumjodid-Stärkepapier) und es wurde abfiltriert, das anhaftende Dimethylformamid durch Wasserwäsche entfernt und sorgfältig getrocknet. Es konnten auf diese

Weise 7,8 g eines hellbräunlichen Pulvers isoliert werden, das hauptsächlich aus Terephthalsäurediamid sowie Terephthalsäure bestand. Das Filtrat wurde nun in einem guten Vakuum vorsichtig zur Trockne eingeengt und in verdünnter Salzsäure aufgenommen. Dabei hinterblieb erneut ein Rückstand, der nach sorgfältigem Auswaschen und Trocknen 6,9 g betrug und dessen Hauptkomponenten Terephthalsäure, Terephthalamidsäure sowie Benzoesäure waren. Die wäßrige Lösung wurde anschließend mit Ammoniak neutralisiert und durch Extraktion mit Methylenchlorid konnten daraus noch 2,4 g an Paraphenylendiamin isoliert werden.

**Patentansprüche**

1. Verfahren zur Herstellung verkappter Isocyanate der allgemeinen Formel

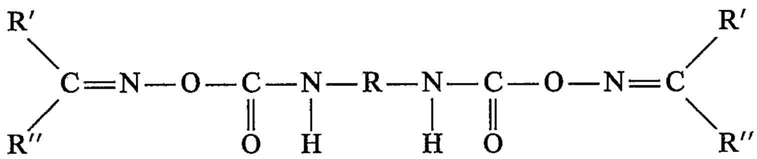

in der R, R′ und R″ für einen aliphatischen, cycloaliphatischen oder aromatischen Kohlenwasserstoffrest stehen, wobei die Reste R′ und R″ gleich oder verschieden sein können und im Falle R′= aromatischer Rest R″ auch ein Wasserstoffatom sein kann, dadurch gekennzeichnet, daß man ein Terephthaldialdoxim, Isophthaldialdoxim oder ein aliphatisches, cycloaliphatisches oder aromatisches Ketoxim bzw. ein aromatisches Aldoxim der allgemeinen Formel

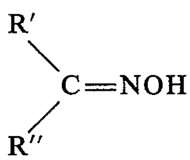

in Gegenwart von 10 bis 100 Molprozent Natrium-, Kalium- oder Calciumhydroxid — bezogen auf eingesetztes Ketoxim bzw. Aldoxim — mit dem Natrium-, Kalium- oder Calciumsalz eines Bis-N-chloramid der allgemeinen Formel

Cl – NH – CO – R – CO – NH – Cl

in Wasser oder einem Gemisch aus Wasser und einem aprotischen Lösungsmittel umsetzt.

2. Verfahren nach Anspruch 1, dadurch gekennzeichnet, daß man Terephthaldialdoxim, Benzaldehyd- Cyclohexanon-, Aceton- oder Acetophenonoxim einsetzt.

3. Verfahren nach den Ansprüchen 1 und 2, dadurch gekennzeichnet, daß das aprotische Lösungsmittel Dimethylacetamid, Dimethylformamid, Sulfolan oder Tetramethylharnstoff ist.

**Claims**

1. A process for the production of masked isocyanates corresponding to the following general formula

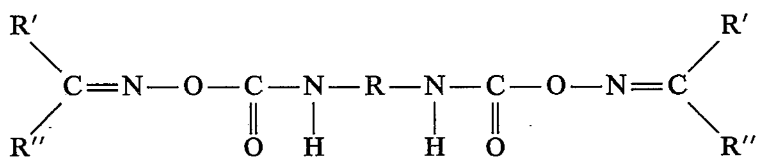

in which R, R′ and R″ represent an aliphatic, cycloaliphatic or aromatic hydrocarbon radical, the radicals R′ and R″ optionally being the same or different and, where R′ is an aromatic radical, R″ may even be a hydrogen atom, charaterised in that a terephthaldialdoxime, isophthaldialdoxime or an aliphatic, cycloaliphatic or aromatic ketoxime or an aromatic aldoxime corresponding to the following general formula

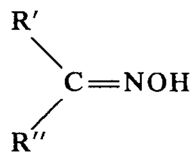

is reacted in the presence of from 10 to 100 mole percent of sodium, potassium or calcium hydroxide, based on the ketoxime or aldoxime used, with the sodium, potassium or calcium salt of a bis-N-chloramide corresponding to the following general formula

Cl – NH – CO – R – CO – NH – Cl

in water or in a mixture of water and an aprotic solvent.

2. A process as claimed in Claim 1, characterised in that terephthaldialdoxime, benzaldehyde-, cyclohexanone-, acetone- or acetophenone-oxime is used.

3. A process as claimed in Claims 1 and 2, characterised in that the aprotic solvent is dimethyl acetamide, dimethyl formamide, sulfolane or tetramethyl urea.

**Revendications**

1. Procédé de préparation d'isocyanates masqués de formule générale

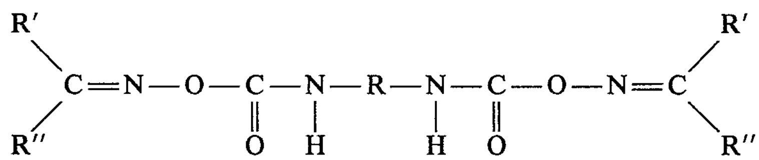

où R, R' et R'' représentent un reste hydrocarboné aliphatique, cycloaliphatique ou aromatique, les restes R' et R'' pouvant être semblables ou différents, et, dans le cas où R' est un reste aromatique, R'' pouvant être aussi un atome d'hydrogène, caractérisé par le fait que l'on fait réagir dans l'eau, ou dans un mélange d'eau et d'un solvant aprotique, une téréphtaldialdoxime, une isophtaldialdoxime ou une cétoxime aliphatique, cycloaliphatique ou aromatique ou une aldoxime aromatique de formule générale

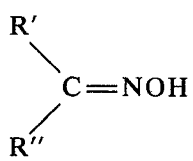

en présence de 10 à 100 pour cent en mole d'hydroxyde de sodium, de potassium ou de calcium, par rapport à la cétoxime ou l'aldoxime utilisée, avec le sel de sodium, de potassium ou de calcium d'un bis-N-chloramide de formule générale:

Cl – NH – CO – R – CO – NH – Cl

2. Procédé selon la revendication 1, caractérisé par le fait que l'on utilise la téréphtaldialdoxime, la benzaldéhydoxime, la cyclohexanone-oxime, acétoxime ou l'acétophénoneoxime.

3. Procédé selon les revendications 1 et 2, caractérisé par le fait que le solvant aprotique est le diméthylacétamide, le diméthylformamide, le sulfolane ou la tétraméthylurée.